# EUROPEAN PATENT SPECIFICATION

(11) **EP 2 444 712 B1**
(45) Date of publication and mention of the grant of the patent: **07.08.2019**
(21) Application number: 11009863.9
(22) Date of filing: 19.06.2008
(51) Int. Cl.: F17C 9/00, F17C 5/06, F17C 9/02

(54) **Fuel gas supply system of a ship**
Treibgaszufuhrsystem für ein Schiff
Système d'alimentation en gaz combustible

(30) Priority: 19.07.2007 KR 20070072242; 27.11.2007 KR 20070121558; 30.11.2007 KR 20070123679; 05.03.2008 KR 20080020356
(43) Date of publication of application: 25.04.2012
(62) Divisional of application: 08766457.9
(73) Proprietor: Daewoo Shipbuilding&Marine Engineering Co., Ltd., Seoul 100-180 (KR)
(72) Inventor: Lee, Jung Han, Geoje-si 656-753, Gyeongsangnam-do (KR); Kwon, Soon Been, Seocho-gu 137-030, Seoul (KR); Kim, Nam Soo, Suwon-si 442-150, Gyeonggi-do (KR); Cho, Ik Kyu, Goyang-si 412-220, Gyeonggi-do (KR); Choi, Dong Kyu, Geoje-si 656-757 Gyeongsangnam-do (KR); Park, Hyun Ki, Geoje-si 656-752, Gyeongsangnam-do (KR)
(74) Representative: Bosch Jehle Patentanwaltsgesellschaft mbH

(56) References cited:
- EP-A1- 1 990 272
- EP-A2- 1 956 285
- WO-A1-97/32157

## Description

The present invention relates to a fuel gas supply system, and more particularly, to a fuel gas supply system of a ship for efficiently supplying fuel gas from an LNG tank to a high-pressure gas injection engine in the ship.

Generally, natural gas is turned into a liquefied natural gas (hereinafter called "LNG") at a cryogenic temperature in a liquefaction plant, and then transported over long distances to a destination by an LNG carrier.

As liquefaction of natural gas occurs at a cryogenic temperature of -163 degrees Celsius at ambient pressure, LNG is likely to be vaporized even when the temperature of the LNG is slightly higher than -163 degrees Celsius at ambient pressure. In an LNG carrier having an LNG storage tank which is thermally-insulated, as heat is continually transmitted from the outside to the LNG in the LNG storage tank, the LNG is continually vaporized and boil-off gas is generated in the LNG storage tank during the transportation of LNG by the LNG carrier.

In the LNG carrier, if boil-off gas is accumulated in an LNG storage tank, the pressure in the LNG storage tank excessively increases. Consequently, to treat the boil-off gas generated in the LNG storage tank, the boil-off gas is used as a fuel for a ship propulsion engine or burned in a gas combustor.

In case where a high-pressure gas injection engine, for example, MEGI engine manufactured by MAN B&W Diesel Inc., is used as a ship propulsion engine of an LNG carrier, a multi-stage compressor is used in a conventional fuel gas supply system to compress boil-off gas at a high pressure. This multi-stage compression has problems that the fuel gas supply system becomes very complex, and that an excessive amount of power is required to compress the boil-off gas in a gaseous state at a high pressure.

A ship such as a bulk carrier, a container ship, a crude oil tanker and chemical tanker could be propelled using LNG as fuel. Such a ship has an LNG fuel tank for storing LNG as fuel and uses the same engine as the LNG carrier. The fuel gas supply system of such a ship has same problems as that of the LNG carrier.

The EP 1 990 272 A1 refers to a fuel gas supply system of an LNG carrier, wherein LNG is extracted from an LNG storage tank.

The WO 97/32157 A1 refers to a plant for the production of fuel gas, whereby only boil-off gas is compressed, not liquid type LNG.

The EP 1 956 285 A2 refers to a heat exchanger to receive boil-off gas, and LNG extracted from an LNG tank, wherein a boil-off gas line with the boil-off gas passes the heat exchanger.

According to the invention, there is provided a fuel gas supply system as defined by the features of independent claim 1.

Further advantageous features are defined in the dependent claim.

Advantageously, the high-pressure pump compresses the reliquefied boil-off gas to 200 to 300 bar (gauge pressure) and supplies the compressed liquefied boil-off gas as fuel gas to the high-pressure gas injection engine.

Advantageously, the fuel gas supply system further comprises:
a heat exchanger installed between the one pump and the other pump in the fuel gas supply line; and
a boil-off gas liquefaction line passing through the heat exchanger from an upper portion of the LNG tank and connected between the heat exchanger and the gasifying means.

Advantageously, the fuel gas supply system further comprises:
a recondenser installed downstream of the one pump in the fuel gas supply line; and
a boil-off gas liquefaction line connected from an upper portion of the LNG tank, passing through the recondenser, and to the LNG tank.

Advantageously, the gasifying means is a heater.

Advantageously, LNG is extracted from the LNG tank and then compressed to approximately 20 to 300 bar gauge pressure.

Advantageously, the LNG tank is designed to withstand a pressure increase due to the boil-off gas so as to allow a pressure increase due to the boil-off gas generated in the LNG tank during the voyage of the ship.

Advantageously, the ship is a ship such as a bulk carrier, a container ship, a crude oil tanker and chemical tanker and the LNG tank is an LNG fuel tank for storing LNG as fuel.

Advantageously, the LNG pressure for the high-pressure gas injection engine ranges from about 20 bar to about 300 bar gauge pressure.

To solve some of the above-mentioned or other problems posed by the prior art, the present invention inter alia is to provide a fuel gas supply system and method of a ship which can simplify the configuration, reduce power requirements, and prevent an excessive pressure increase due to accumulation of boil-off gas in an LNG tank, in supplying fuel gas to a high-pressure gas injection engine of the ship.

To achieve the above-mentioned purposes, the fuel gas supply system of a ship according to one embodiment of the present invention, as a system for supplying fuel gas to a high-pressure gas injection engine of a ship, is characterized in that LNG is extracted from an LNG tank of the ship, compressed at a high pressure, gasified, and then supplied to the high-pressure gas injection engine.

### BRIEF DESCRIPTION OF THE SEVERAL VIEWS OF THE DRAWINGS

Figure 1 is a schematic view of a fuel gas supply system of a ship which does not belong to the present invention;
Figure 2 is a schematic view of a fuel gas supply system of a ship which does not belong to the present invention; and
Figure 3 is a schematic view of a fuel gas supply system of a ship according to an embodiment of the present invention.

### DETAILED DESCRIPTION

Preferred embodiments of the present invention will be described in detail below with references to the accompanying drawings.

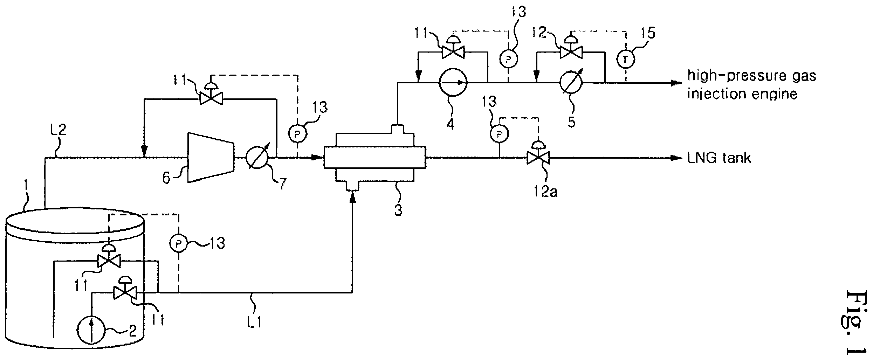

Figure 1 is a schematic view of a fuel gas supply system of a ship which does not belong to the present invention. As illustrated in Figure 1, the fuel gas supply system of a ship is to supply fuel gas to a high-pressure gas injection engine of a ship.

The fuel gas supply system of Figure 1 includes a fuel gas supply line L1 for supplying LNG extracted from an LNG tank 1 of a ship to a high-pressure gas injection engine of the ship, and a heat exchanger 3 installed in the middle of the fuel gas supply line L1 so as to exchange heat between LNG and boil-off gas extracted from the LNG tank 1.

In this case, the LNG tank 1 is an LNG storage tank.

Further, the ship may be a ship such as a bulk carrier, a container ship, a crude oil tanker and chemical tanker that could be propelled using LNG as fuel. Such a ship has an LNG fuel tank for storing LNG as fuel. In this case, the LNG tank 1 is an LNG fuel tank for storing LNG as fuel.

The fuel gas supply line L1 upstream of the heat exchanger 3 has a first pump 2 for compressing the LNG to meet the pressure requirements for the high-pressure gas injection engine and supplying the LNG toward the high-pressure gas injection engine. The first pump 2 is illustrated as installed in the LNG tank 1, but may be installed in the fuel gas supply line L1 upstream of the heat exchanger 3 outside the LNG tank 1. Also, the first pump 2 may comprise one pump or two pumps.

A boil-off gas liquefaction line L2 is connected from an upper portion of the LNG tank 1, passing through the heat exchanger 3, to one side of the LNG tank 1. The boil-off gas is extracted from an upper portion of the LNG tank 1, passes through the heat exchanger 3, and is returned to one side of the LNG tank 1.

In the heat exchanger 3, the LNG exchanges heat with the boil-off gas to increase the temperature of the LNG and then the LNG is supplied toward the high-pressure gas injection engine, and the boil-off gas is liquefied by heat exchange with the LNG and then returned to the LNG tank 1. If the boil-off gas in an upper portion of the LNG tank 1 is liquefied and returned to a lower portion of the LNG tank 1, it can prevent the pressure in the LNG tank 1 from excessively increasing due to accumulation of the boil-off gas in the LNG tank 1.

In one embodiment, a second pump 4 is installed in the fuel gas supply line L1 downstream of the heat exchanger 3 so as to compress the LNG which has exchanged heat with the boil-off gas to meet the pressure requirements for the high-pressure gas injection engine, and then to supply the compressed LNG to the high-pressure gas injection engine.

A heater 5 is installed in the fuel gas supply line L1 downstream of the second pump 4 so as to heat the LNG which has exchanged heat in the heat exchanger 3, and then to supply the heat exchanged LNG to the high-pressure gas injection engine.

In one embodiment, boil-off gas compressor 6 and a cooler 7 are installed in the boil-off gas liquefaction line L2 upstream of the heat exchanger 3 so as to compress and cool the boil-off gas extracted from the LNG tank 1 before the exchange of heat between the boil-off gas and the LNG.

In a case where the high-pressure gas injection engine is, for example, an MEGI engine manufactured and sold by MAN B&W Diesel Inc., the pressure of the fuel gas required for the MEGI engine can range from 200 to 300 bar (gauge pressure), preferably 250 bar (gauge pressure). The LNG is compressed to 27 bar (gauge pressure) in the first pump 2, and the temperature of the LNG increases from approximately -163 degrees Celsius to approximately -100 degrees Celsius while passing through the heat exchanger 3, and the LNG in a liquid state is supplied to the second pump 4 and compressed to approximately 250 bar (gauge pressure) in the second pump 4 (as it is in a supercritical state, there is no division between liquid and gas states), then heated in the heater 5, and then supplied to the high-pressure gas injection engine. In this case, as the pressure of the LNG supplied to the heat exchanger 3 is high, the LNG, though its temperature increases by passing through the heat exchanger, is not gasified.

On the other hand, in case where the high-pressure gas injection engine is, for example, a gas turbine engine, the pressure of fuel gas required for the gas turbine engine can range from 20 to 40 bar (gauge pressure), preferably 30 bar (gauge pressure). The LNG is compressed to 30 bar (gauge pressure) in the first pump 2, and part of the LNG is gasified while passing through the heat exchanger 3, supplied to the heater 5 and heated in the heater 5, and then supplied to the high-pressure gas injection engine. In this case, the second pump 4 is not necessary.

Flow rate control-type pressure control valves 11 are installed in the fuel gas supply line L1 at the front and rear of the first pump 2, in the fuel gas supply line L1 at the front and rear of the second pump 4, and in the boil-off gas liquefaction line L2 at the front and rear of the boil-off gas compressor 6 and the cooler 7, so as to control the pressure of the fluid passing through the lines.

Also, flow rate control-type temperature control valves 12 are installed in the fuel gas supply line I1 at the front and rear of the heater 5 so as to control the temperature of the fluid passing though the line.

Pressure sensors 13 are connected between the fuel gas supply line L1 at a rear end of the first pump 2, the fuel gas supply line L1 at a rear end of the second pump 4, the boil-off gas liquefaction line L2 at a rear end of the boil-off gas compressor 6 and the cooler 7, and the pressure control valves 11. Also, temperature sensors 15 are connected between the fuel gas supply line L1 at a rear end of the heater 5 and the temperature control valves 12.

The flow rate control-type pressure control valves 11 and temperature control valve 12 control the flow rate, thereby controlling the pressure or temperature of the fluid passing through themselves.

Also, an expandable pressure control valve 12a is installed in the middle of the boil-off gas liquefaction line L2 downstream of the heat exchanger 3 so as to control the pressure of the fluid passing through the line L2.

The pressure sensor 13 is connected between the pressure control valve 12a and the boil-off gas liquefaction line L2 at a front end of the pressure control valve 12a installed in the boil-off gas liquefaction line L2 downstream of the heat exchanger 3.

The pressure control valve 12a installed in the boil-off gas liquefaction line L2 downstream of the heat exchanger 3 expands the passing fluid so as to correspond to the pressure which is obtained by adding the pressure of the LNG tank 1 to the pressure due to water head of the LNG in the LNG tank 1, thereby controlling the pressure, and the temperature of the LNG decreases by the expansion.

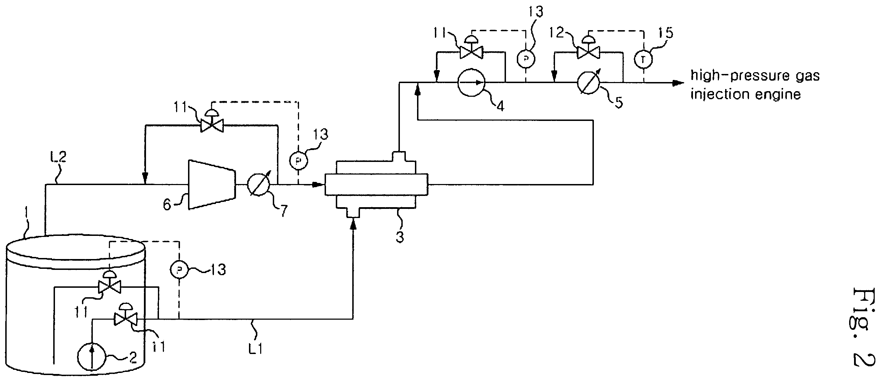

As illustrated in Figure 2, the boil-off liquefaction line L2 may be configured such that it passes through the heat exchanger 3 from an upper portion of the LNG tank 1 and is connected between the heat exchanger 3 and the heater 5 in the middle of the fuel gas supply line L1. According to this configuration, boil-off gas is liquefied by heat exchange with the LNG in the heat exchanger 3, compressed in a liquid state, gasified, and then used as fuel gas of the high-pressure gas injection engine. In this case, the pressure control valve 12a installed in the boil-off gas liquefaction line L2 downstream of the heat exchanger 3 controls the pressure of the passing fluid to correspond to the pressure of the LNG in the fuel gas supply line L1.

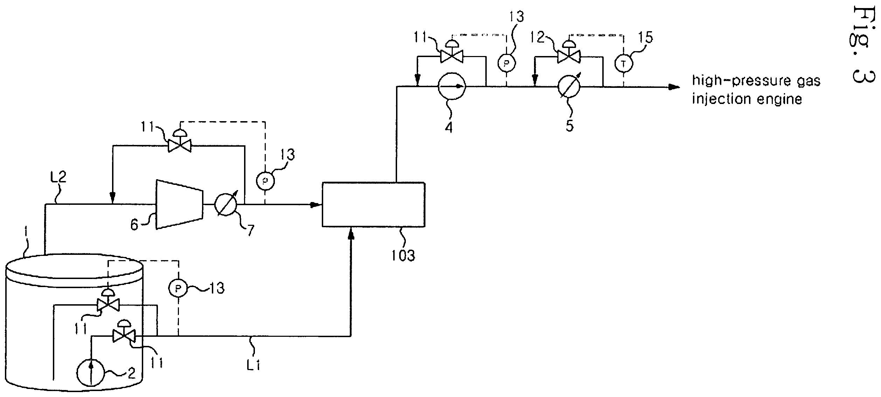

The heat exchanger 3 for exchanging heat between the LNG and the boil-off gas extracted from the LNG tank 1 is installed in the middle of the fuel gas supply line L1. However, instead of the heat exchanger 3, a recondenser for directly mixing the LNG and the boil-off gas may be installed. According to the embodiment illustrated in Figure 3, a recondenser 103 instead of a heat exchanger is installed in the fuel gas supply line L1. The boil-off gas liquefaction line L2 for extracting boil-off gas from an upper portion of the LNG tank 1 and returning the extracted boil-off gas to one side of the LNG tank 1 passes through the recondenser 103 installed in the middle of the fuel gas supply line L1. The recondenser 103 generates condensed LNG by mixing/liquefying the LNG extracted from a lower portion of the LNG tank 1 and the boil-off gas extracted from the upper portion of the LNG tank 1. The LNG condensed in the recondenser 103 is supplied to the high-pressure gas injection engine through the fuel gas supply line L1, or returned to the LNG tank 1 through the boil-off gas liquefaction line L2.

Also, according to the fuel gas supply system of a ship of the present invention, the boil-off gas generated in the LNG tank is not compressed in a gas
state at a high pressure, and thus is not used as fuel gas of the high-pressure gas injection engine.

Additionally, the LNG tank used in the fuel gas supply system of a ship according to embodiments of the present invention may be designed such that it has strength enough to withstand a pressure increase due to the boil-off gas so as to allow the pressure increase due to the boil-off gas generated in the LNG tank during the voyage of the ship.

Further, the fuel gas supply system of a ship according to embodiments of the present invention may include a boil-off gas reliquefaction apparatus comprising a cold box and a refrigeration system. A heat exchanger is installed in the middle of the fuel gas supply line for compressing the LNG in the LNG tank and supplying the compressed LNG as fuel gas to the high-pressure gas injection engine, and the fuel gas generated in the LNG tank exchanges heat with the LNG in the middle of the boil-off gas supply line, and thereby is liquefied. Consequently, the boil-off gas reliquefaction apparatus which is additionally installed may be configured to have a small capacity.

As apparent from the above, according to the fuel gas supply system of a ship of the present invention, LNG is extracted from an LNG tank, compressed at a high pressure, gasified, and supplied to a high-pressure gas injection engine. Consequently, the fuel gas supply system and method have advantages of simplifying the configuration, reducing power requirements, and preventing an excessive pressure increase due to accumulation of boil-off gas in the LNG tank, in supplying fuel gas to the high-pressure gas injection engine in a ship.

## Claims

1. A fuel gas supply system of any one of a bulk carrier, a container ship, a crude oil tanker and a chemical tanker for supplying fuel gas from an LNG tank (1), which stores LNG as fuel gas, to a high-pressure gas injection engine, comprising:
a boil-off gas liquefaction line (L2) configured to extract boil-off gas generated in the LNG tank (1);
a compressor (6) installed in the boil-off gas liquefaction line to compress the boil-off gas;
a recondenser (103) configured to condense the compressed boil-off gas;
a fuel gas supply line (L1) configured to extract LNG from the LNG tank and supply the extracted LNG as fuel gas to the high-pressure gas injection engine;
a first pump (2) to compress the LNG and to communicate the compressed LNG downstream along the fuel gas supply line,
a second pump (4) installed in the fuel gas supply line to compress LNG from the LNG tank at a high pressure and supply the compressed LNG to the high-pressure gas injection engine;
a vaporizer configured to vaporize reliquefied boil-off gas;
wherein the recondenser (103) condenses the boil-off gas by using LNG extracted from the LNG tank, directly mixing the LNG and the boil-off gas,
wherein the second pump is configured to receive the compressed LNG and
further compress the LNG to meet the pressure requirements for the high-pressure gas injection engine.

2. The fuel gas supply system of a vessel according to claim 1, wherein the second pump (4) compresses the LNG to a pressure of 200 to 300 bar.

## Patentansprüche

1. Treibgaszuführsystem von einem von einem Frachtschiff, einem Containerschiff, einem Rohöltanker und einem Chemietanker zum Zuführen von Treibstoffgas von einem LNG (liquefied natural gas; verflüssigtes Erdgas) -Tank (1), der LNG als Treibstoffgas lagert, zu einer Hochdruckgas-Einspritzmaschine, mit:
einer Boil-Off-Gas-Verflüssigungsleitung (L2), die dazu konfiguriert ist, Boil-Off-Gas zu extrahieren, das in dem LNG-Tank (1) erzeugt wurde;
einem Kompressor (6), der in der Boil-Off-Gas-Verflüssigungsleitung installiert ist, um das Boil-Off-Gas zu komprimieren;
einem Rekondensierer (103), der dazu konfiguriert ist, das komprimierte Boil-Off-Gas zu kondensieren;
einer Treibgaszuführleitung (L1), die dazu konfiguriert ist, LNG aus dem LNG-Tank zu extrahieren und das extrahierte LNG als Treibstoffgas der Hochdruckgas-Einspritzmaschine zuzuführen;
einer ersten Pumpe (2), um das LNG zu komprimieren und das komprimierte LNG stromabwärts entlang der Treibgaszuführleitung zu kommunizieren;
einer zweiten Pumpe (4), die in der Treibgaszuführleitung installiert ist, um LNG aus dem LNG-Tank mit hohem Druck zu komprimieren und das komprimierte LNG der Hochdruckgas-Einspritzmaschine zuzuführen;
einem Verdampfer, der dazu konfiguriert ist, rückverflüssigtes Boil-Off-Gas zu verdampfen;
wobei der Rekondensierer (103) das Boil-Off-Gas unter Verwendung von LNG, das aus dem LNG-Tank extrahiert wurde, kondensiert, wobei das LNG und das Boil-Off-Gas direkt gemischt werden,
wobei die zweite Pumpe dazu konfiguriert ist, das komprimierte LNG zu empfangen und das LNG weiter zu komprimieren, um die Druckerfordernisse für die Hochdruckgas-Einspritzmaschine zu erfüllen.

2. Treibgaszuführsystem eines Schiffs nach Anspruch 1, wobei die zweite Pumpe (4) das LNG auf einen Druck von 200 bis 300 Bar komprimiert.

## Revendications

1. Système d'alimentation de gaz combustible de l'un quelconque parmi un vraquier, un porte-conteneurs, un pétrolier et un chimiquier pour alimenter un gaz combustible d'une cuve (1) de GNL, qui stocke du GNL comme gaz combustible, jusqu'à un moteur à injection de gaz haute pression, comprenant :
une ligne (L2) de liquéfaction de gaz d'évaporation configurée pour extraire un gaz d'évaporation généré dans la cuve (1) de GNL ;
un compresseur (6) installé dans la ligne de liquéfaction de gaz d'évaporation pour compresser le gaz d'évaporation ;
un recondenseur (103) configuré pour condenser le gaz d'évaporation comprimé ;
une ligne (L1) d'alimentation de gaz combustible configurée pour extraire du GNL de la cuve de GNL et alimenter le GNL extrait comme gaz combustible jusqu'au moteur à injection de gaz haute pression ;
une première pompe (2) pour comprimer le GNL et pour acheminer le GNL comprimé vers l'aval le long de la ligne d'alimentation de gaz combustible ;
une deuxième pompe (4) installée dans la ligne d'alimentation de gaz combustible pour comprimer le GNL provenant de la cuve de GNL à une pression élevée et alimenter le GNL comprimé jusqu'au moteur à injection de gaz haute pression ;
un vaporiseur configuré pour vaporiser le gaz d'évaporation reliquéfié ;
dans lequel le recondenseur (103) condense le gaz d'évaporation en utilisant le GNL extrait de la cuve de GNL, en mélangeant directement le GNL et le gaz d'évaporation,
dans lequel la deuxième pompe est configurée pour recevoir le GNL comprimé et plus encore compresser le GNL pour satisfaire aux exigences de pression pour le moteur à injection de gaz haute pression.

2. Système d'alimentation de gaz combustible d'un navire selon la revendication 1, dans lequel la deuxième pompe (4) compresse le GNL à une pression de 200 à 300 bars.
